# EUROPÄISCHE PATENTANMELDUNG

(11) **EP 0 794 690 A2**
(43) Veröffentlichungstag der Anmeldung: **10.09.1997**
(21) Anmeldenummer: 97103493.9
(22) Anmeldetag: 04.03.1997
(51) Int. Cl.: H05B 37/02

(54) **Beleuchtungsanordnung mit von einem Lichtsensor gesteuerten Lichtquellen**

(30) Priorität: 04.03.1996 DE 19608224
(71) Anmelder: Herbert Waldmann GmbH & Co., 78056 Villingen-Schwenningen (DE)
(72) Erfinder: Waldmann, Gerhard, D-78083 Dauchingen (DE)
(74) Vertreter: Patentanwälte Westphal, Buchner, Mussgnug Neunert, Göhring

(57) **Zusammenfassung**

Die Erfindung betrifft eine Beleuchtungsanordnung, deren Lichtquellen zur optimalen Ausleuchtung des Arbeitsplatzes bei geringstmöglichem Energieaufwand von Lichtsensoren ohne Verwendung von Bewegungsmeldern gesteuert werden. Die Grundidee der Erfindung besteht darin, mittels des Lichtsensors die Beleuchtungsstärke am Arbeitsplatz, insbesondere auf der Arbeitsfläche, zu kontrollieren und die Lichtquellen bei Überschreiten vorgegebener Grenzwerte entweder stufenweise abzuschalten oder deren Lichtstärke mittels einer Dimmerschaltung kontinuierlich bis auf Null zu reduzieren. Der Lichtsensor ist hierbei nahe der Arbeitsfläche derart am Gehäuse der Lichtquelle angeordnet, daß er nicht unmittelbar von dem Licht der Lichtquelle getroffen wird.

## Beschreibung

Die Erfindung betrifft eine Beleuchtungsanordnung der im Oberbegriff des Anspruchs 1 bzw. des Anspruchs 4 angegebenen Art.

Um die Beleuchtung den gegebenen Lichtverhältnissen anzupassen und Energie zu sparen, ist es üblich, Lichtquellen mit lichtempfindlichen Sensoren, sogenannten Lichtsensoren, zu steuern, d. h. in Abhängigkeit vom Tageslicht ein- bzw. auszuschalten.

Daneben ist die Verwendung von Bewegungsmeldern üblich, welche bei einer in dem zu beleuchtenden Raum erfaßten Bewegung die Lichtquelle einschalten. Des weiteren werden neuerdings Kombinationen von Lichtsensor und Bewegungsmelder angeboten. Diese Kombinationen sollen sicherstellen, daß die Lichtquelle ausgeschaltet wird, wenn eine Person den Raum verläßt, sowie daß das Beleuchtungsniveau mit heller werdendem Tageslicht bzw. Umlicht abgesenkt wird bzw. die Beleuchtung ganz abgeschaltet wird.

Die Licht- und Bewegungssensoren befinden sich in der Regel in der Raummitte, in der Nähe des Arbeitsplatzes oder im Eingangsbereich.

Zwar ist mit dieser Sensorenkombination eine wirtschaftliche Lichtsteuerung möglich. Wegen der relativ kostspieligen Bewegungsmelder und der bauseitig entstehenden Installationskosten ist der Aufwand jedoch erheblich.

Der vorliegenden Erfindung liegt die Aufgabe zugrunde, eine lichtsensorgesteuerte Beleuchtungsanordnung zu schaffen, welche trotz Verzichtes auf einen Bewegungsmelder eine mindestens gleichwertige Beleuchtungssteuerung ermöglicht.

Eine Lösung der gestellten Aufgabe für eine Beleuchtungsanordnung mit mindestens zwei Lichtquellen ist mit den Merkmalen nach Anspruch 1 vorgeschlagen.

Eine Lösung für eine Beleuchtungsanordnung mit mindestens einer dimmbaren Lichtquelle ist mit den Merkmalen des Anspruchs 4 vorgeschlagen.

Für beide Lösungen gemeinsam ist der Vorschlag, im Steuerstromkreis mindestens einen Grenzwertschalter vorzusehen, dessen Grenzwert so eingestellt ist, daß bei einer vorgegebenen Beleuchtungsstärke der Arbeitsfläche oder des Arbeitsplatzes die Lichtquelle vollständig ausgeschaltet wird, wobei der Sensor unmittelbar am Gehäuse der Lichtquelle derart angeordnet ist, daß er von dem Licht, das von der Arbeitsfläche reflektiert wird und/oder dem Tages- bzw. Umlicht direkt, nicht dagegen direkt vom Licht der Lichtquelle getroffen wird.

Durch diese Maßnahmen ist erreicht, daß die ausgeleuchtete Arbeitsfläche stets genügend Licht erhält, wobei mit zunehmendem Tages- oder Umlicht die der Arbeitsfläche unmittelbar zugeordnete Lichtquelle abgeschaltet wird.

Nach dem Vorschlag gemäß Anspruch 1 sind mehrere Lichtquellen vorgesehen, welche stufenweise über eigene Grenzwertschalter mit unterschiedlichen Grenzwerten nacheinander in Abhängigkeit von der Beleuchtungsstärke zu- oder abgeschaltet werden.

Die schaltungsmäßige Realisierung ist mit Anspruch 2 angegeben.

Soweit als Lichtquellen Leuchtstofflampen verwendet sind, sind gemäß Anspruch 3 deren konventionelle Vorschaltgeräte nacheinander mittels der sensorgesteuerten Schalter ein- bzw. auszuschalten.

Der Vorschlag gemäß Anspruch 4 geht von einer Beleuchtungsanordnung mit einer dimmbaren Lichtquelle aus, bei welcher der Dimmerschalter mittels des Lichtsensors in Abhängigkeit vom Tages- bzw. Umlicht gesteuert wird. Gemäß der Erfindung steuert der Lichtsensor zusätzlich über einen Grenzwertschalter mit einstellbarem Grenzwert einen im Arbeitsstromkreis der Lichtquelle liegenden Schalter derart, daß die Stromversorgung bei Erreichen eines bestimmten Helligkeitsniveaus an der Arbeitsfläche ganz unterbrochen wird. Auch in diesem Fall muß dafür gesorgt werden, daß der Lichtsensor nicht unmittelbar vom Licht der Lichtquelle, dagegen von dem von der Arbeitsfläche reflektierten Licht und/oder dem Tages- bzw. Umlicht getroffen wird.

Die schaltungsmäßige Realisierung ist Gegenstand des Anspruchs 5.

Soweit als Lichtquelle gemäß Anspruch 6 Leuchtstofflampen verwendet sind, ist in an sich bekannter Weise als Dimmerschalter ein dimmbares Vorschaltgerät vorzusehen.

Falls die Beleuchtungsstärke am Arbeitsplatz für einen vorgegebenen Zeitraum ein bestimmtes Niveau überschreitet, also ausreichend Tages- oder Umlicht zur Verfügung steht, wird die Lichtquelle zweckmäßigerweise gänzlich abgeschaltet.

Um dies zu erreichen, ist gemäß Anspruch 7 vorgeschlagen, den Grenzwertschalter mit einem Zeitglied auszustatten, welches bei Überschreiten des Grenzwertes für einen vorgegebenen Zeitraum den im Versorgungsstromkreis der Lichtquelle liegenden Schalter im offen Zustand hält, also die Lichtquelle ganz ausschaltet.

Die Wiedereinschaltung der Beleuchtungsanordnung sollte zweckmäßigerweise bei maximaler Beleuchtungsstärke erfolgen, so daß beim Betreten des Raumes ausreichende Helligkeit gewährleistet ist. Mittels der erfindungsgemäßen Sensoranordnung kann dann die Beleuchtungsanordnung bis zum Ausschalten heruntergeregelt werden.

Zweckmäßige Anordnungen der Lichtsensoren sind mit den Ansprüchen 8 bis 10 angegeben.

Die erfindungsgemäßen Vorschläge sind im übrigen nachstehend anhand von Blockschaltbildern bzw. zeichnerisch dargestellten Leuchten erläutert. In den Zeichnungen zeigen
- Figur 1: Blockschaltbildeiner Beleuchtungsanordnung mit zwei stufenweise abschaltbaren Lichtquellen,
- Figur 2: Blockschaltbild einer Beleuchtungsanordnung mit dimmergeregelter, abschaltbarer Lichtquelle,
- Figur 3: Ansicht einer Stehleuchte mit integriertem Sensor zur indirekten Beleuchtung,
- Figur 4: Seitenansicht einer Tischleuchte mit integriertem Sensor,
- Figur 5: Seitenansicht einer Deckenleuchte mit integriertem Lichtsensor zur indirekten Beleuchtung und
- Figur 6: Stirnansicht der Leuchte gemäß Figur 5.

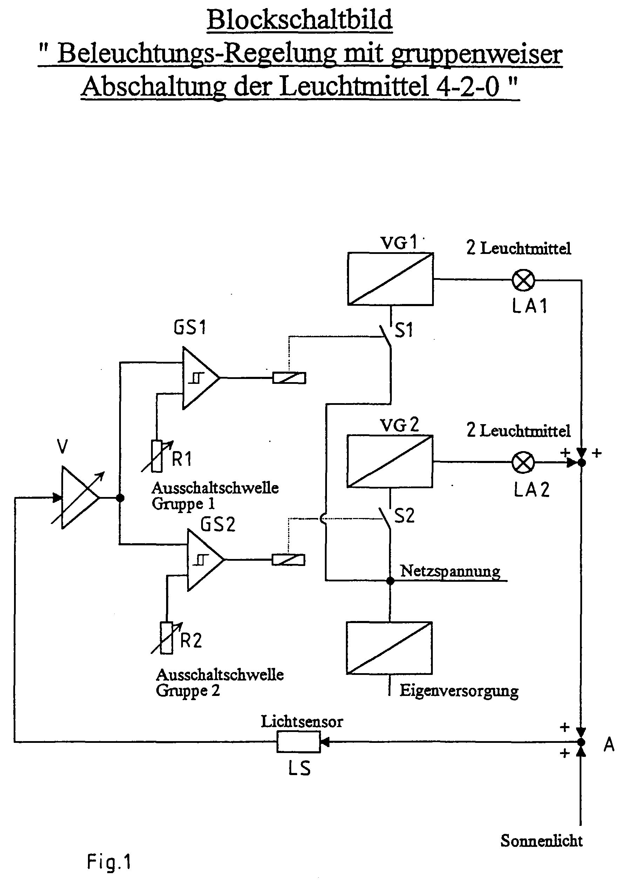

In Figur 1 ist die Schaltungsanordnung für eine Beleuchtungsanordnung mit zwei Leuchtstofflampen LA1 und LA2 dargestellt. Die den Leuchtstofflampen LA1 und LA2 zugeordneten Vorschaltgeräte VG1 und VG2 liegen über steuerbare Schalter S1 und S2 an Netzspannung. Diese Schalter S1 und S2 können die Schaltkontakte von Schaltrelais RL1 und RL2 sein, die ihrerseits über Grenzwertschalter GS1 und GS2 vom Lichtsensor LS gesteuert werden. Zur Einstellung des Empfindlichkeitsniveaus sowie zur Abkopplung des Ausganges des Lichtsensors LS von den Eingängen der Grenzwertschalter GS1 und GS2 ist ein in seiner Verstärkung einstellbarer Verstärker V vorgesehen.

Die Grenzwerte der Grenzwertschalter GS1 und GS2 sind mit veränderbaren Widerständen R1 und R2 unterschiedlich einstellbar.

Wie mit den Pfeilen schematisch angedeutet ist, wird die Arbeitsfläche A sowohl vom Sonnen- bzw. Tageslicht als auch vom Licht der Lichtquellen LA1 und LA2 beleuchtet, wodurch der Lichtsensor LS im wesentlichen nur das von der Arbeitsfläche reflektierte Licht erfaßt. Überschreitet dieses Licht einen vorgegebenen ersten, mit dem veränderbaren Widerstand R1 eingestellten Grenzwert, so wird das Vorschaltgerät VG1 und damit die Lichtquelle LA1 mittels des Schalters S1 ausgeschaltet.

Erreicht die Beleuchtungsstärke den zweiten, mit dem veränderbaren Widerstand R2 vorgegebenen Grenzwert, so wird auch die zweite Lichtquelle LA2 mittels des im Stromkreis des Vorschaltgerätes VG2 liegenden Schalters S2 ausgeschaltet.

Die Stromversorgung der gesamten Schaltung erfolgt aus der Eigenversorgung.

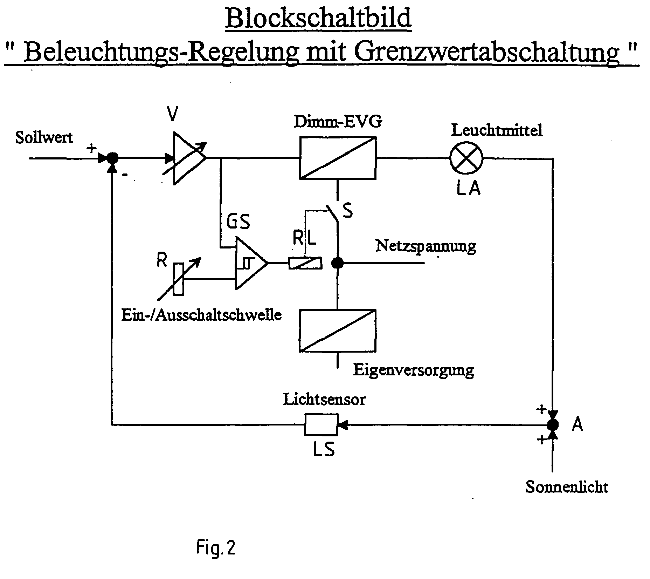

Bei einer anderen Variante nach dem erfindungsgemäßen Vorschlag, wie diese mit dem Blockschaltbild gemäß Figur 2 veranschaulicht ist, ist nur eine Lichtquelle LA vorgesehen, deren Helligkeit über ein dimmbares elektronisches Vorschaltgerät Dimm-EVG in Abhängigkeit von der Beleuchtungsstärke am Arbeitsplatz A gesteuert wird. Zu diesem Zweck ist gleichfalls ein Lichtsensor LS vorgesehen, dessen Ausgangssignal über einen Verstärker V mit einstellbarem Verstärkungsgrad das Vorschaltgerät Dimm-EVG steuert.

Um bei einer derartigen Anordnung eine Abschaltung bei Erreichen eines vorgegebenen Beleuchtungsniveaus zu ermöglichen, ist im Arbeitsstromkreis für Vorschaltgerät und Lichtquelle ein steuerbarer Schalter S vorgesehen. Dieser steuerbare Schalter S kann auch hier der Schaltkontakt eines Relais RL sein, das mit dem Ausgang eines Grenzwertschalters GS verbunden ist. Der Eingang des Grenzwertschalters GS ist mit dem Ausgang des Verstärkers V verbunden und wird folglich mit einem vom Lichtsensor LS erzeugten helligkeitsabhängigen Signal angesteuert. Überschreitet dieses Signal die mit dem veränderbaren Widerstand R vorgegebene Ausschaltschwelle, so wird der relaisgesteuerte Schalter S geöffnet und damit die Lichtquelle LA ausgeschaltet.

Auch in diesem Fall ist die Anordnung des Lichtsensors LS derart, daß seine lichtempfindliche Schicht nur von dem von der Arbeitsfläche A reflektierten Licht und nicht direkt von dem von der Lichtquelle LA erzeugten Licht getroffen wird.

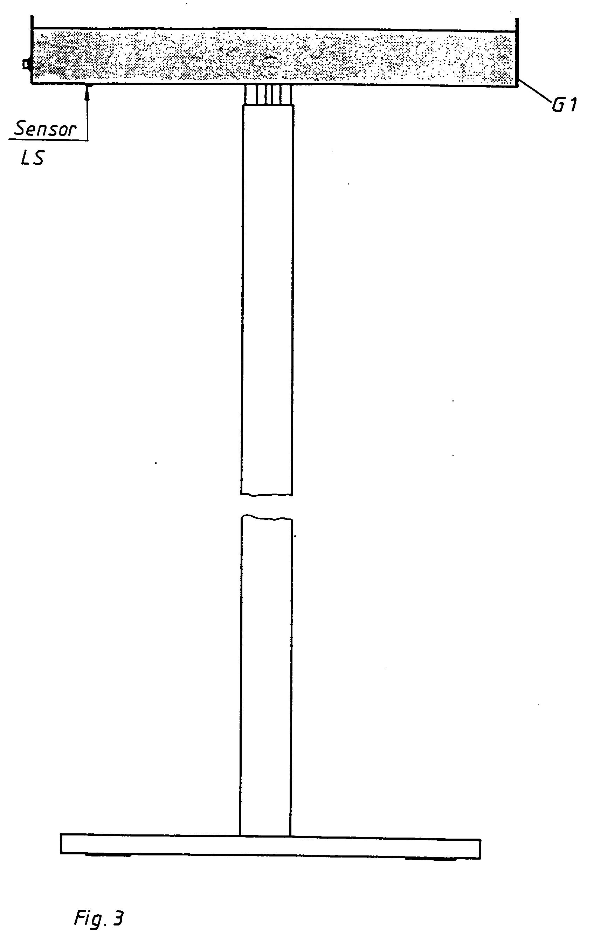

Mit den Figuren 3 bis 6 sind Leuchten veranschaulicht, bei welchen die Sensoranordnungen der erläuterten Vorgabe entsprechen.

Die Stehleuchte gemäß Figur 3 weist ein Leuchtengehäuse G1 zur indirekten Raumbeleuchtung auf. Hier befindet sich der Lichtsensor LS auf der unteren Seite des Gehäuses G1, so daß er nicht direkt von dem nach oben austretenden Licht getroffen wird.

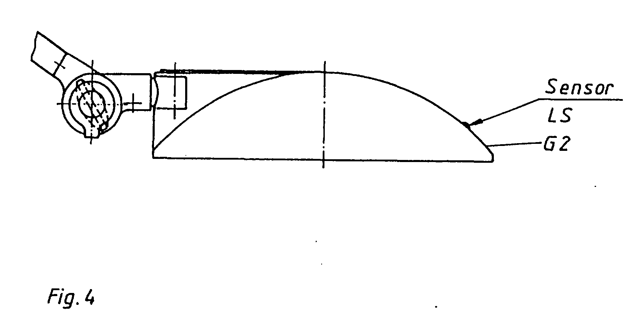

Bei der Arbeitsplatzleuchte gemäß Figur 4, deren Leuchtengehäuse G2 in Seitenansicht dargestellt ist, tritt das Licht nach unten auf die Arbeitsfläche aus. Hier ist der Lichtsensor LS an der der Lichtaustrittsseite abgewandten Oberseite des Gehäuses G2 angeordnet, so daß der Sensor LS wiederum nur dem von der Arbeitsfläche reflektierten Licht, dem Umlicht bzw. dem Tageslicht, ausgesetzt ist.

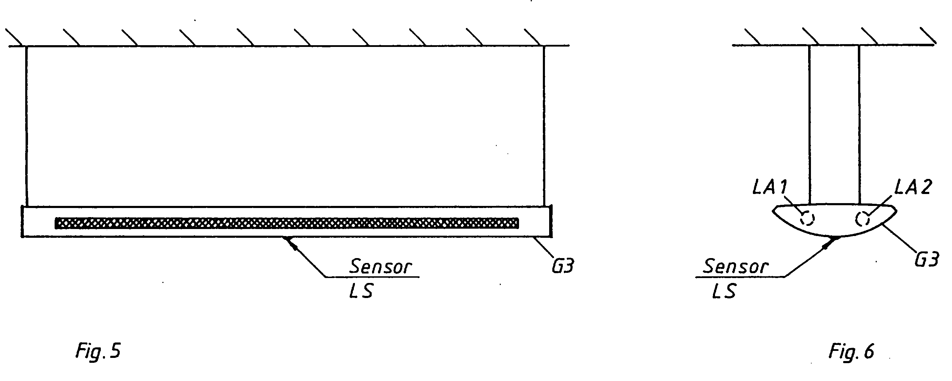

Die Anordnung des Lichtsensors LS bei der Deckenleuchte zur indirekten Beleuchtung gemäß Figur 5 und 6 entspricht der Anordnung gemäß Figur 3. Da auch hier das Leuchtengehäuse G3 so ausgebildet ist, daß es das Licht nach oben abgibt und damit den Raum indirekt beleuchtet, befindet sich der Lichtsensor an der Unterfläche des Leuchtengehäuses G3.

## Patentansprüche

1. Beleuchtungsanordnung mit mindestens zwei Lichtquellen (LA1, LA2) zur Beleuchtung einer Arbeitsfläche (A) und einem die Stromversorgung der Lichtquellen (LA1, LA2) steuernden Lichtsensor (LS), dadurch gekennzeichnet, daß im Steuerkreis zwischen Lichtsensor (LS) und den Lichtquellen (LA1, LA2) jeweils ein Grenzwertschalter (GS1, GS2) angeordnet ist, wobei die Grenzwerte dieser Grenzwertschalter (GS1, GS2) derart eingestellt sind, daß die Lichtquellen (LA1, LA2) mit zunehmender bzw. abnehmender Beleuchtungsstärke der Arbeitsfläche (A) nacheinander ab- bzw. zugeschaltet werden, und daß der Lichtsensor (LS) unmittelbar am Gehäuse (G1, G2, G3) der Lichtquelle (LA1, LA2) derart angeordnet ist, daß er von dem von der Arbeitsfläche (A) reflektierten Licht und/oder dem Tages- bzw. Umlicht und nicht unmittelbar von dem Licht der Lichtquellen (LA1, LA2) getroffen wird.

2. Beleuchtungsanordnung nach Anspruch 1, dadurch gekennzeichnet, daß der Lichtsensor (LS) mit dem Eingang eines regelbaren Verstärkers (V) verbunden ist, dessen Ausgang mit dem Eingang von Grenzwertschaltern (GS1, GS2) mit einstellbaren Grenzwerten verbunden ist, deren Ausgänge im Arbeitsstromkreis der Lichtquellen (LA1, LA2) liegende Schalter (S1, S2) steuern.

3. Beleuchtungsanordnung nach Anspruch 1 oder 2, dadurch gekennzeichnet, daß die Lichtquellen Leuchtstofflampen (LA1, LA2) sind, die über Vorschaltgeräte (VG) an Netzspannung liegen, wobei im Arbeitsstromkreis der Vorschaltgeräte (VG) die vom Lichtsensor (LS) gesteuerten Schalter (S1, S2) angeordnet sind.

4. Beleuchtungsanordnung mit mindestens einer über einen Dimmerschalter (Dimm-EVG) an Spannung liegender Lichtquelle (LA) zur Beleuchtung einer Arbeitsfläche (A) und einen den Dimmerschalter (Dimm-EVG) steuernden Lichtsensor (LS), dadurch gekennzeichnet, daß der Ausgang, des Lichtsensors (LS) sowohl mit dem Steuerkreis des Dimmerschalters (Dimm-EVG) als auch dem Eingang eines Grenzwertschalters (GS) mit einstellbarem Grenzwert verbunden ist, dessen Ausgang einen im Arbeitsstromkreis der Lichtquelle (LA) liegenden Schalter (S) steuert, und daß der Lichtsensor (LS) unmittelbar am Gehäuse (G1, G2, G3) der Lichtquelle (LA) derart angeordnet ist, daß er von dem von der Arbeitsfläche reflektierten Licht und/oder dem Tages- bzw. Umlicht und nicht unmittelbar von dem Licht der Lichtquelle (LA) getroffen wird.

5. Beleuchtungsanordnung nach Anspruch 4, dadurch gekennzeichnet, daß der Lichtsensor (LS) mit dem Eingang eines einstellbaren Verstärkers (V) verbunden ist, dessen Ausgang mit dem Steuerkreis des Dimmerschalters (Dimm-EVG) und einem Eingang des Grenzwertschalters (GS) verbunden ist.

6. Beleuchtungsanordnung nach Anspruch 4 oder 5, dadurch gekennzeichnet, daß die Lichtquelle eine Leuchtstofflampe (LA) und der Dimmerschalter ein dimmbares elektronisches Vorschaltgerät (Dimm-EVG) ist, wobei im Arbeitsstromkreis des dimmbaren Vorschaltgerätes (Dimm-EVG) der vom Lichtsensor (LS) gesteuerte Schalter (S) angeordnet ist.

7. Beleuchtungsanordnung nach einem der Ansprüche 1 bis 6, dadurch gekennzeichnet, daß der Grenzwertschalter (GS1, GS2, GS) ein Zeitglied aufweist, welches bei Überschreiten des Grenzwertes für eine vorgegebene Zeitdauer den im Versorgungsstromkreis der Lichtquelle (LA, LA1, LA2) liegenden Schalter (S1, S2, S) im offenen Zustand hält.

8. Beleuchtungsanordnung nach einem der Ansprüche 1 bis 7, mit einer in einem Reflektor oder einem Gehäuse (G1, G2, G3) angeordneten Lichtquelle, dadurch gekennzeichnet, daß der Lichtsensor (LS) am Reflektor bzw. Gehäuse (G1, G2, G3) auf der von der Lichtquelle abgewandten Seite vorgesehen ist.

9. Beleuchtungsanordnung nach Anspruch 8 zur indirekten Beleuchtung der Arbeitsfläche, dadurch gekennzeichnet, daß der Lichtsensor (LS) auf die Arbeitsfläche (A) gerichtet ist (Fig. 3, 5, 6).

10. Beleuchtungsanordnung nach Anspruch 8 zur direkten Beleuchtung der Arbeitsfläche, dadurch gekennzeichnet, daß der Sensor (LS) auf der von der Arbeitsfläche abgewandten Seite angeordnet ist (Fig. 4).
